# FASCICULE DE BREVET EUROPEEN

(11) **EP 4 193 095 B1**
(45) Date de publication et mention de la délivrance du brevet: **12.02.2025**
(21) Numéro de dépôt: 21749057.2
(22) Date de dépôt: 05.08.2021
(51) Int. Cl.: F24D 19/10, F24D 3/08, F24D 11/02, F24D 17/00, F24D 17/02

(54) **PROCEDE ET INSTALLATIONS POUR FOURNIR DE L'ENERGIE NOTAMMENT THERMIQUE DANS AU MOINS UN BATIMENT OU ANALOGUE, ET SYSTEME S'Y RAPPORTANT**
VERFAHREN UND ANLAGEN ZUR BEREITSTELLUNG VON ENERGIE, INSBESONDERE WÄRMEENERGIE, IN MINDESTENS EINEM GEBÄUDE ODER DERGLEICHEN UND ZUGEHÖRIGES SYSTEM
METHOD AND INSTALLATIONS FOR PROVIDING ENERGY, PARTICULARLY THERMAL ENERGY, IN AT LEAST ONE BUILDING OR THE LIKE, AND RELATED SYSTEM

(30) Priorité: 05.08.2020 FR 2008303
(43) Date de publication de la demande: 14.06.2023
(73) Titulaire: Accenta, 92100 Boulogne Billancourt (FR)
(72) Inventeur: TREMOLIERES, Pierre, 91400 ORSAY (FR); BRUAND, Philippe, 78110 LE VESINET (FR)
(74) Mandataire: IPAZ
(86) Numéro de dépôt international: PCT/EP2021/071882
(87) Numéro de publication internationale: WO 2022/029235

(56) Documents cités:
- EP-A1- 3 196 559
- WO-A2-02/15365
- DE-A1- 102016 015 503

## Description

La présente invention concerne un procédé pour fournir de l'énergie notamment thermique dans au moins un bâtiment ou analogue, en vue d'une optimisation au regard d'un certain nombre de critères qui peuvent inclure le coût d'installation, les coûts de fonctionnement, la réduction de consommation énergétique, des considérations environnementales etc.

La présente invention concerne également une installation permettant la mise en oeuvre du procédé, ainsi qu'une installation configurée favorablement à cet effet.

La présente invention comprend en outre un système de régulation pour la mise en oeuvre du procédé.

### Etat de la technique

L'invention intéresse tout particulièrement mais non limitativement les ensembles immobiliers relativement grands, par exemple les immeubles collectifs, groupes d'immeubles, ensembles industriels, les centres hospitaliers, les centres commerciaux, les hôtels ou complexes de type hôtelier, les ensembles scolaires ou universitaires etc.

Dans le domaine du bâtiment on connaît les installations permettant d'approvisionner l'énergie en provenance de plusieurs sources, par exemple réseaux publics de distribution de gaz ou d'électricité, sondes géothermiques, capteurs solaires thermiques, capteurs solaires photovoltaïques, capteurs aérothermiques ou etc. Ces installations connues comportent divers équipements pour transformer l'énergie collectée et pour l'utiliser, par exemple des pompes à chaleur, des appareils de chauffage par effet Joule, des climatiseurs, des chaudières etc. Il est également connu de mettre en oeuvre un procédé qui régule l'installation en pondérant le recours aux différentes sources et aux différents équipements en fonction des besoins et selon des critères économiques ou autres.

Les documents DE 102016015503 A1, FR 2 960 099 A1, US 2008/092 875 A1, WO 2015/014 951 A2, EP 3 012 539 A1, EP 2 141 419 A1, FR 3 065 516 A1, EP 1 987 298 B1, DE 10 2010 033 909 A1, DE 100 22 544 A1, US 2018/0 283 799 A1, KR 2013 00 17 182 A et KR 101 801 775 B1 décrivent des installations de ce type, perfectionnées de diverses manières dans le sens d'une exploitation optimisée des ressources les plus avantageuses en termes de coût et/ou d'environnement.

De telles installations rencontrent en pratique des difficultés qui peuvent être chroniques ou ponctuelles. Parmi les difficultés chroniques on citera notamment la dérive en température du milieu géothermique dans lequel sont implantées les sondes. Par exemple en contrée tempérée ou froide le milieu géothermique excessivement sollicité se refroidit de plus en plus au fil des ans, au point de devenir inexploitable, la régénération naturelle du sol n'étant pas suffisante pour renouveler les calories prélevées. A l'inverse, en contrée chaude, le milieu géothermique incapable d'évacuer les calories apportées par la climatisation devient progressivement trop chaud pour être exploitable. Dans un cas comme dans l'autre, de coûteuses installations géothermiques tombent dans l'abandon après quelques années, ou alors il faudrait les sur-dimensionner au point de les rendre non viables sur le plan économique. Même si de tels extrêmes sont évités, l'installation équipée d'une géothermie ayant dérivé en température devient globalement moins efficace puisque la géothermie, censée être l'une des sources les plus avantageuses, ne l'est plus autant que prévu à la conception. Un autre exemple de difficulté chronique peut être un changement durable du coût du recours à telle ou telle source, ou même à tel ou tel équipement installé dans le bâtiment. Un exemple de difficulté ponctuelle peut être un avatar climatique ou tarifaire, les deux allant parfois de pair, si par exemple une période de grand froid s'accompagne d'un tarif fortement accru de l'électricité fournie par le réseau public.

Le but de la présente invention est ainsi de remédier au moins en partie à ces inconvénients en proposant un procédé et/ou une installation et/ou un système de régulation capable(s) d'optimiser durablement la fourniture d'énergie notamment thermique dans au moins un bâtiment ou analogue en évitant une partie au moins des écueils du genre chronique ou ponctuel dont certains exemples ont été donnés ci-dessus.

### Exposé de l'invention

Suivant l'invention, le procédé pour fournir de l'énergie notamment thermique dans au moins un bâtiment ou analogue au moyen d'une installation est défini à la revendication 1. L'installation comprend:
■ des équipements de collecte d'énergie qui sont en relation de transfert d'énergie chacun avec une source respective ;
■ des équipements de transformation d'énergie alimentés au moins en partie par les équipements de collecte ;
■ des équipements utilisateurs d'énergie ;

- une structure de stockage d'énergie thermique;

procédé dans lequel on opère une régulation plaçant les équipements dans des états d'activation respectifs choisis en fonction de la demande et de paramètres notamment climatiques, dans le sens d'une optimisation au regard d'au moins un critère,
et dans lequel, à un instant d'intervention de la régulation, la régulation comprend une prise en compte de prévisions concernant l'un au moins des paramètres, lesdites prévisions portant sur une période postérieure audit instant d'intervention.

Suivant l'invention au lieu de gérer le présent uniquement en fonction d'observations et d'une situation héritée des instants précédents, on anticipe les situations futures. Selon l'invention, les états d'activation définis par le procédé à un instant donné sont élaborés pour prévenir des difficultés futures ou profiter d'opportunités futures que l'on peut anticiper sur la base d'informations accessibles. De préférence les états d'activation sont choisis pour atteindre une optimisation englobant le futur tel qu'il peut être prévu. Par exemple, si une période de grand froid est annoncée en hiver, on peut s'attendre à une demande énergétique exceptionnellement élevée des occupants et en même temps à un relèvement temporaire des tarifs de l'énergie fournie par les réseaux publics. Avec l'invention on anticipe cette période en accumulant de l'énergie durant la période précédente, dans des équipements ou ressources de stockage qui peuvent être le milieu géothermique, des citernes d'eau chaude, des batteries électriques, des volants d'inertie etc. Cette accumulation est possible par exemple avec au moins un capteur solaire thermique et/ou en surconsommant de l'électricité pour activer au moins une pompe à chaleur fournissant de la chaleur à l'équipement ou ressource de stockage. Si une période de canicule est prévue après une période fraîche, le chauffage pendant la période fraîche peut avantageusement être assuré en puisant dans des réserves thermiques qui pourront être reconstituées pendant la canicule.

Dans une réalisation, la régulation définit une succession dans le temps de combinaisons d'états d'activation de certains au moins des équipements sur une durée postérieure à l'instant d'intervention, dans un sens d'optimisation sur la durée au regard de l'au moins un critère. A un instant donné, le procédé a déjà défini à l'avance non seulement les états d'activation des différents équipements à cet instant, mais aussi la succession des états d'activation de chaque équipement dans les instants qui composent une durée succédant à cet instant, et c'est cette succession qui est optimisée au regard de l'au moins un critère d'optimisation prédéfini. Si dans un exemple simple il y a un seul critère d'optimisation qui est le coût de fonctionnement, la combinaison d'états d'activation définie par le procédé pour un instant n'est pas forcément la plus économique à cet instant, mais elle fera partie d'une succession de combinaisons d'états dans le temps qui sera globalement la plus économique à la fin de la durée prise en compte. Le choix de la bonne succession de combinaisons est réalisable par exploration systématique de très nombreuses successions de combinaisons, notamment de celles capables de fournir à chaque instant donné, le cas échéant avec un coefficient de sécurité, la puissance qui sera nécessaire à cet instant d'après les prévisions prises en compte. S'il y a plusieurs critères d'optimisation, par exemple la réduction du coût de fonctionnement et la réduction de la consommation d'énergie, on pourra par exemple donner une valeur pécuniaire fictive à l'énergie consommée et prendre comme critère la somme du coût financier réel et du coût fictif de l'énergie consommée.

L'au moins un paramètre faisant l'objet de la prise en compte de prévisions peut comprendre la température extérieure, et/ou l'ensoleillement et/ou un prix de l'énergie en provenance de l'une des sources, et/ou un paramètre d'état de l'une des sources, par exemple la température du milieu géothermique et/ou un paramètre d'état d'une structure de stockage. Les paramètres de type climatique ou tarifaire sont disponibles sous forme codée pour l'utilisation par des systèmes.

Selon l'invention, l'au moins un paramètre faisant l'objet de la prise en compte prévisions comprend un paramètre d'état de ladite structure de stockage d'énergie thermique,

Dans une version typique, la prise en compte de prévisions est opérée au moins en partie par un état d'activation faisant varier le contenu énergétique de ladite structure de stockage énergétique. Par exemple, en plus de ceux déjà présentés plus haut, en prévision d'une période de forte chaleur augurant de forts besoins de rafraîchissement, on peut refroidir le milieu géothermique grâce à au moins une pompe à chaleur qui réchauffe une structure de stockage telle qu'une citerne d'eau chaude que l'on pourra ensuite utiliser pour le chauffage de l'eau chaude sanitaire.

Dans une version perfectionnée l'invention prévoit de prendre en compte le bâtiment en tant que structure de stockage. Un bâtiment a une capacité calorifique considérable. Par ailleurs les bâtiments récents, très bien isolés thermiquement, sont capables de stocker un certain temps l'énergie thermique qu'ils accumulent. On peut en prévision de grand froid surchauffer le bâtiment de quelques degrés Celsius puis le laisser se refroidir jusqu'à une température inférieure à la normale pendant la période de grand froid de façon à réduire le besoin d'approvisionnement énergétique pendant la période la plus critique. Comme déjà dit au travers d'exemples précédents, dans une version de l'invention, on prend en compte en tant que structure de stockage un milieu géothermique équipé de sondes géothermiques faisant partie desdits équipements de collecte. Grâce à l'invention l'équipement et le milieu géothermiques peuvent être gérés de façon particulièrement pertinente dans le sens d'une exploitation maximale de cette ressource à faible coût d'exploitation sans risquer l'épuisement de la ressource et par voie de conséquence de l'équipement associé. Ainsi l'invention permet également de bénéficier pleinement de cette ressource même avec un moindre investissement de départ en termes de sondes à installer.

Selon une version préférée, l'au moins une structure de stockage comprend une citerne dont le contenu énergétique varie par variation de la proportion de phase solide d'un corps contenu dans la citerne, par exemple de l'eau ou de l'eau additivée.

Suivant une réalisation, la régulation est capable de modifier les états d'activation en des instants d'intervention successifs, séparés par des tranches de temps où la régulation est passive, les tranches de temps étant de préférence de l'ordre du quart d'heure.

Dans une version avantageuse, la régulation comporte une régulation-maître mettant en oeuvre la prise en compte des prévisions, et un automate commandant les équipements en fonction notamment de la demande énergétique instantanée et de préconisations reçues de la régulation-maître. Ainsi le procédé selon l'invention est adapté à compléter une installation à automate pouvant par ailleurs être assez classique. Par exemple, si l'installation comporte deux pompes à chaleur utilisant des formes ou des sources d'énergie différentes, la régulation-maître selon l'invention va par exemple autoriser le fonctionnement de l'une d'elles et interdire l'autre, ou à d'autres instants prioriser le fonctionnement de l'une par rapport à l'autre. Ainsi, l'état d'activation selon l'invention désigne soit une commande directe d'un équipement, soit de préférence une préconisation d'activation ou de désactivation, ou encore par exemple une préconisation conditionnelle ou restreinte. Une préconisation conditionnelle peut par exemple être l'autorisation de fonctionner si un autre équipement, plus prioritaire, ne parvient pas à satisfaire la demande. Une préconisation restreinte peut par exemple être une autorisation avec limite de puissance. L'automate peut lui-même comporter une unité centrale qui reçoit les préconisations et pilote des équipements communs à l'ensemble de l'installation comme par exemple un équipement géothermique, et des unités-esclaves fonctionnant sous le pilotage de l'unité centrale et affectées chacune à une partie de l'installation, par exemple une unité esclave pour chaque partie d'installation affectée à l'un respectif des immeubles d'un ensemble immobilier. Autrement dit l'unité centrale tient compte d'une partie des préconisations, concernant les équipements communs, et transmet à chaque unité esclave les préconisations concernant les équipements pilotés par cette unité esclave, respectivement.

Dans une version du procédé, la prise en compte de prévisions comprend une prévision de réaction du milieu géothermique à un échange thermique avec des sondes géothermiques faisant partie des équipements de collecte. Les milieux géothermiques réagissent de façon assez différente en fonction de la nature du sol, de son humidité etc.

Aux fins de cette prise en compte, et notamment en l'absence d'informations disponibles à ce sujet, avant la mise en service de l'installation, on peut avoir avantage à procéder à des tests de réponse thermique du milieu géothermique à des échanges thermiques, au moyen d'une sonde-test.

Selon l'invention, le procédé comprend les étapes suivantes :
■ avant la mise en service de l'installation, sur la base de données relatives au bâtiment (1), à son utilisation prévue, et à son environnement géographique et climatique, établir un scénario horodaté des flux énergétiques des différents équipements, dans un sens d'optimisation sur la période couverte par le scénario ;
■ en service, procéder à une collecte d'informations plus récentes que les données, et à une réactualisation du scénario en fonction desdites informations ;
■ en service, exécuter le scénario dans sa version la plus récente.

L'exécution du scénario peut consister en une commande directe des équipements ou, dans une version à deux niveaux de régulation, par exemple telle que présentée plus haut (régulation-maître et automate respectivement), peut consister en la transmission de préconisations au niveau de régulation inférieur. Celui-ci pilote les équipements en fonction desdites préconisations et de ses propres paramètres d'entrée, tels notamment que le niveau de demande des différentes formes d'énergie.

Cette version de l'invention utilisant un scénario est avantageuse car elle permet la prise en compte d'évènements probables dans un avenir aussi lointain qu'on le veut. Concrètement le scénario peut porter sur une année entière, indéfiniment renouvelable de façon glissante. Par exemple le scénario peut être établi pour une période allant du 1^{er} Janvier au 31 Décembre et à la mise en route de l'installation la régulation met en oeuvre le scénario tel qu'il est prévu au jour et à l'heure de la mise en route, après une période plus ou moins longue nécessaire pour atteindre le régime « de croisière ». Cette période peut être longue car, par exemple, un bâtiment d'habitation n'est en général pas complètement occupé tout de suite. Une fois le régime de croisière atteint le scénario est régulièrement réactualisé en fonction des prévisions.

Dans une version, même la période de montée en régime jusqu'au régime de croisière peut être optimisée par le processus de réactualisation.

Les informations collectées comprennent selon l'invention des prévisions météorologiques et/ou relatives à l'occupation du bâtiment.

Selon l'invention, la réactualisation du scénario fait intervenir un apprentissage automatique (« Machine Learning ») basé sur une corrélation temporelle entre des besoins énergétiques passés observés dans le bâtiment, et des paramètres, notamment météorologiques et calendaires. Le scénario est de préférence établi sur la base d'un chronogramme des besoins énergétiques prévisionnels du bâtiment. A l'usage ce chronogramme peut être affiné ou corrigé en fonction de données non plus prévisionnelles mais réelles. A partir de là, le scénario peut à son tour être corrigé.

Avantageusement, les informations collectées comprennent une mesure de température dans un milieu géothermique équipé de sondes géothermiques faisant partie des équipements de collecte. Si ces informations traduisent une possibilité de dérive du milieu géothermique, le scénario est modifié dans un sens faisant évoluer le milieu géothermique en sens contraire de la dérive anticipée.

Dans une version particulièrement préférée, la réactualisation du scénario comprend :
■ une réactualisation à haute fréquence, typiquement tous les quarts d'heure, et réactualisant le scénario sur les quelques jours qui suivent l'instant de réactualisation ; et
■ une réactualisation à basse fréquence, typiquement tous les quelques jours, par exemple tous les mois, réactualisant la totalité du scénario.

La réactualisation à haute fréquence est de préférence aussi rapide que raisonnablement envisageable compte-tenu des délais de modification des états d'activation de certains équipements, notamment les pompes à chaleur, les chaudières etc.

La réactualisation à basse fréquence correspond à des calculs plus lourds qui par exemple d'une part actualisent le scénario complet sur la base d'observations par exemple sur le comportement énergétique des occupants, ou encore de prévisions météorologiques à long terme, et d'autre part raccordent ce scénario à long terme avec la version du scénario telle qu'elle a été actualisée pour les jours qui viennent par la réactualisation à haute fréquence.

Suivant un second aspect de l'invention, avant d'établir le scénario dont il est question ci-dessus, on procède aux étapes suivantes :
■ en fonction d'une simulation thermique dynamique du bâtiment, d'une utilisation prévue du bâtiment et d'une climatologie annuelle du site d'implantation du bâtiment, établir un chronogramme annuel de divers besoins énergétiques du bâtiment ;
■ se doter d'un catalogue d'équipements de collecte, de transformation d'utilisation et/ou de stockage d'énergie compatibles avec le chronogramme, et avec des données relatives au cahier des charges du bâtiment ;
■ par itérations informatiques tester virtuellement différentes combinaisons d'équipements du catalogue et de dimensionnements de ces équipements pour déterminer celles capables de satisfaire au moins en grande partie le chronogramme ;
■ établir le scénario horodaté de chacune des combinaisons déterminées comme capables de satisfaire le chronogramme ;
■ sélectionner l'une de ces combinaisons déterminées et le scénario horodaté correspondant, et construire l'installation correspondant à la combinaison sélectionnée.

L'installation est ensuite mise en service conformément au scénario horodaté avec lequel elle a été sélectionnée, le scénario étant ensuite, de préférence actualisé en temps réel par exemple comme dit plus haut.

Suivant un troisième aspect de l'invention défini à la revendication 17, l'installation pour fournir de l'énergie notamment thermique dans au moins un bâtiment ou analogue, comprend:
■ des équipements de collecte d'énergie qui sont en relation de transfert d'énergie chacun avec une source respective ;
■ des équipements de transformation d'énergie alimentés au moins en partie par les équipements de collecte ;
■ des équipements utilisateurs d'énergie ;
   - une structure de stockage d'énergie thermique;
■ un système de régulation capable de définir pour certains au moins des équipements différents états d'activation respectifs choisis en fonction de paramètres notamment climatiques, dans le sens d'une optimisation au regard de critères,
l'installation étant caractérisée en ce que le système de régulation est configuré pour mettre en oeuvre un procédé selon le premier aspect de l'invention, complété le cas échéant par un ou plusieurs de ses perfectionnements, ou un procédé selon le second aspect.

Suivant un quatrième aspect de l'invention défini à la revendication 18, l'installation pour fournir de l'énergie notamment thermique dans au moins un bâtiment ou analogue, comprend
■ des équipements de collecte d'énergie qui sont en relation de transfert d'énergie chacun avec une source respective ;
■ des équipements de transformation d'énergie alimentés au moins en partie par les équipements de collecte ;
■ des équipements utilisateurs d'énergie ;
   - une structure de stockage d'énergie thermique;
■ un système de régulation capable de définir pour certains au moins des équipements différents états d'activation respectifs choisis en fonction de paramètres notamment climatiques, dans le sens d'une optimisation au regard de critères,
l'installation étant caractérisée en ce que l'installation a été configurée et opère selon un procédé conforme au deuxième aspect de l'invention.

Suivant un cinquième aspect de l'invention défini à la revendication 19, le système pour la régulation d'une installation destinée à la fourniture d'énergie notamment thermique dans au moins un bâtiment ou analogue, cette installation comprenant :
■ des équipements de collecte d'énergie qui sont en relation de transfert d'énergie chacun avec une source respective ;
■ des équipements de transformation d'énergie alimentés au moins en partie par les équipements de collecte ;
■ des équipements utilisateurs d'énergie ;
   - une structure de stockage d'énergie thermique;
le système de régulation étant capable de définir pour certains au moins des équipements différents états d'activation respectifs choisis en fonction de paramètres notamment climatiques, dans le sens d'une optimisation au regard de critères, est caractérisé en ce que le système est conçu pour mettre en oeuvre dans l'installation un procédé selon le premier et/ou le deuxième aspect de l'invention.

De préférence, le système de régulation comporte au moins une entrée capable de recevoir des prévisions portant sur une période postérieure à l'instant courant, l'installation étant conçue pour prendre en compte lesdites prévisions dans le cadre de la prise en compte.

Dans une version préférée, le système de régulation comprend au moins un ensemble de pilotage qui élabore des préconisations prenant en compte les prévisions, les préconisations étant destinées à un automate qui reçoit les préconisations ainsi que des informations relatives à la demande énergétique, et commande certains au moins des équipements en fonction de la demande énergétique et des préconisations.

### Liste des figures

D'autres particularités et avantages de l'invention ressortiront encore de la description qui va suivre, relative à des exemples non-limitatifs. Aux dessins annexés :
[Fig. 1] La Figure 1 est un schéma d'une installation selon l'invention installée dans un bâtiment, les lignes continues représentent des conduites de liquide et les lignes discontinues représentent des lignes électriques ;
[Fig. 2] La Figure 2 est un ensemble de diagrammes temporels visualisant certains aspects du procédé selon l'invention sur une année ; et
[Fig. 3] La Figure 3 est une vue de détail visualisant sous forme de diagrammes temporels certains aspects du procédé selon l'invention sur une partie d'une journée.

### Description détaillée

La description qui suit s'entend comme décrivant toute particularité ou combinaisons de particularités, dans les termes utilisés ci-après ou dans des termes plus généraux, dès lors que cette particularité ou combinaison de particularités est productrice d'effet ou avantage technique, même si la particularité ou combinaison de particularités ne constitue qu'une partie d'une phrase ou d'un paragraphe. L'invention est définie par les revendications.

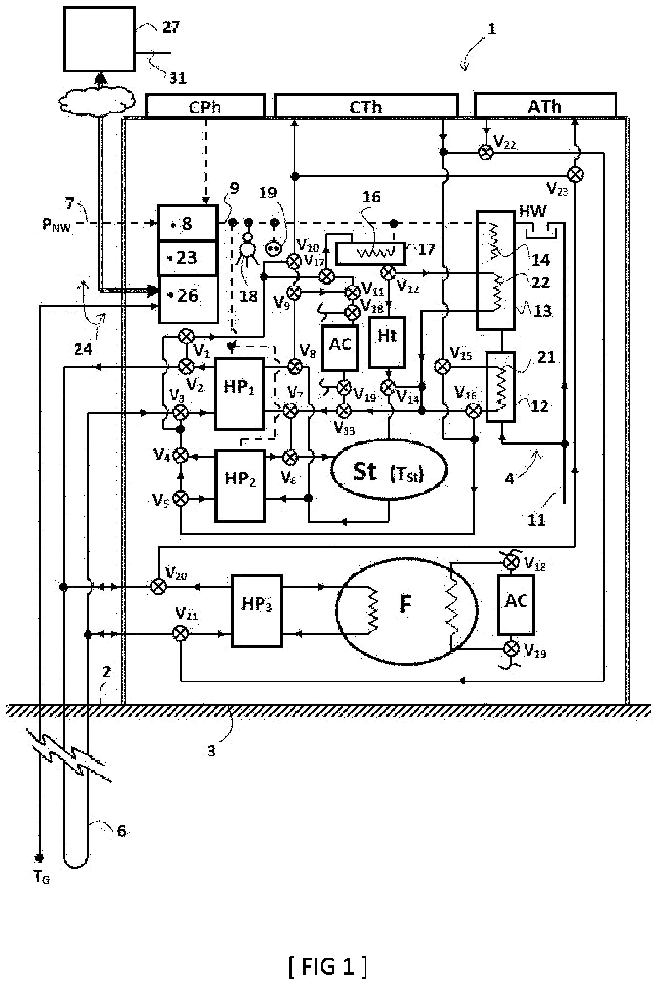

Dans l'exemple représenté à la Figure 1, l'installation est associée à un bâtiment 1 implanté sur un terrain 2. L'installation comprend des équipements de collecte d'énergie comprenant ici au moins un capteur solaire photovoltaïque CPh, au moins un capteur solaire thermique CTh transformant le rayonnement solaire en chaleur absorbée par un liquide caloporteur le traversant, au moins un échangeur aérothermique Ath pouvant fonctionner en capteur thermique ou en dissipateur thermique pour un liquide caloporteur le traversant échangeant des calories avec l'air extérieur, au moins une sonde géothermique 6 et au moins un raccordement à un réseau public de distribution d'électricité 7.

Un boîtier électrique 8 reçoit l'énergie électrique du réseau 7 et du capteur photovoltaïque S et fournit l'électricité de l'une et/ou l'autre de ces provenances sur une sortie de puissance 9. Dans certaines réalisations le boîtier peut également injecter dans le réseau public 7 de l'électricité produite par le capteur photovoltaïque CPh. L'installation 2 comprend également un réseau 3 de conduites pour un liquide caloporteur qui est en général de l'eau ou de l'eau additivée, et un réseau 4 de conduites pour de l'eau sanitaire. Le réseau d'eau sanitaire 4 comprend un branchement d'eau froide 11 à une arrivée d'eau froide qui alimente directement au moins un robinet d'eau froide CW et qui alimente un robinet d'eau chaude HW par l'intermédiaire de deux ballons de chauffage 12, 13, montés en série.

En outre, l'installation comprend divers équipements de transformation d'énergie, à savoir dans l'exemple deux pompes à chaleur réversibles HP1 et HP2, une pompe à chaleur HP3 de type frigorifique, une résistance électrique 14 transformant en chaleur, dans le ballon 13, l'électricité provenant du boîtier 8, et une résistance 16 faisant de même dans un ballon 17 installé en un point du trajet du liquide caloporteur dans le réseau de conduites 3.

Il y a également dans l'installation des équipements d'utilisation de l'énergie, à savoir par exemple des lampes 18 et des prises 19 (une seule de chaque est représentée), au moins un module de climatisation AC (représenté en deux endroits de la Figure 1 pour améliorer la lisibilité des raccordements) et un module de chauffage Ht. Ces modules sont ici des échangeurs entre du liquide caloporteur du réseau 3 et de l'air de l'espace dont la température est à moduler. Les équipements d'utilisation comprennent également deux échangeurs de chaleur 21, 22 entre le liquide caloporteur et l'eau sanitaire occupant les ballons 12 et 13 respectivement.

L'installation comprend encore, selon l'invention des structures de stockage d'énergie thermique (calorifique et/ou frigorifique). Les structures de stockage comprennent ici une citerne St de liquide caloporteur, le bâtiment 1 lui-même, et le sol 2 constituant le milieu géothermique qui interagit avec la sonde 6. En outre, une citerne frigorifique F est capable d'accumuler du froid par congélation progressive d'un corps, par exemple de l'eau ou de l'eau additivée, qui y est contenu de manière permanente, ou de restituer ce froid par décongélation progressive dudit liquide congelé.

Le réseau de conduites 3 comprend un certain nombre de vannes à trois voies V1 - V23, ainsi que des pompes de circulation non représentées.

L'installation est capable de différents modes de fonctionnement. Dans le mode de réalisation nullement limitatif présenté ces modes de fonctionnement sont notamment (les vannes citées pour chaque mode sont en position de permettre l'écoulement indiqué et d'interdire la troisième voie et les vannes non citées sont fermées ; sauf si la troisième voie en question ou la vanne non citée en question est passante pour un autre mode indiqué comme compatible avec le mode considéré) :
■ Mode 1 : Activation de la pompe à chaleur HP1 en production de liquide caloporteur froid pour le module de climatisation AC via les vannes V8, V9, V11, V18, climatiseur AC, vannes V19, V13, V7, en évacuant les calories dans le milieu géothermique via la sonde géothermique 6 et les vannes V2 et V3.
■ Mode 1.1 : Même chose que Mode 1, sauf que les calories sont évacuées dans l'atmosphère par l'échangeur aérothermique Ath via les vannes V2, V23, échangeur aérothermique Ath, vannes V22, V21, V3.
■ Mode 2.: Activation de la pompe à chaleur HP2 pour produire du liquide caloporteur chaud à destination de la citerne St via la vanne V6, à partir de calories fournies à la pompe à chaleur HP2 par le capteur solaire thermique CTh via les vannes V15, V5, la pompe HP2, les vannes V4, V1, et V10.
■ Mode 2.1 : Même chose que le Mode 2, sauf que la pompe à chaleur HP2 se fournit en calories par l'échangeur aérothermique Ath via les vannes V22, V15, V5, pompe à chaleur HP2, vannes V4, V1, V10 et V23.
■ Mode 3 : Activation de la pompe à chaleur HP2 pour produire du liquide caloporteur chaud à destination du module de chauffage Ht et/ou du ballon 13 via les vannes V4, V1, V17, ballon 17, vanne V12, module Ht et/ou ballon 13, vannes V14, V16, V5, à partir de calories fournies à la pompe à chaleur HP2 par la citerne St via la vanne V6 (la pompe à chaleur HP2 fonctionnant donc en inverse par rapport au Mode 2). Réchauffage complémentaire possible par la résistance 16 dans le ballon 17.
■ Mode 4 : Circulation du liquide de la citerne St à travers les vannes V8, V9, V11, Ballon 17 (réchauffage possible par résistance 16), Vanne V12, Module Ht et/ou Ballon 13, Vanne V14 et retour à la citerne St, pour fournir de la chaleur au module de chauffage Ht et/ou au ballon d'eau chaude sanitaire 13.
■ Mode 5 : Activation de la pompe à chaleur HP1 pour produire du liquide caloporteur chaud à destination de l'équipement de chauffage Ht et/ou dans le ballon 13 via les vannes V8, V9, V11, V17, ballon 17 (réchauffage possible par résistance 16), vanne V12, module Ht et/ou ballon 13, vannes V14, V13, V7, à partir de calories fournies par le capteur solaire thermique CTh via les vannes V15, V5, V4, V3, la pompe HP1, les vannes V2, V1, V10.
■ Mode 5.1 : Même chose que Mode 5, sauf que les calories sont fournies par l'échangeur aérothermique Ath via les vannes V22, V15, V5, V4, V3, la pompe HP1, les vannes V2, V1, V10, V23.
■ Mode 5.2 : Même chose que Mode 5, sauf que les calories sont fournies par la sonde géothermique 6 via les vannes V2 et V3.
■ Mode 6 : Activation de la pompe à chaleur HP3 pour refroidir la citerne F et évacuer les calories via les vannes V20, V23, l'échangeur aérothermique Ath, vannes V22, V21.
■ Mode 6.1 : Même chose que Mode 6, mais évacuer les calories via vanne V20, sonde 6, vanne V21.
■ Mode 7 : Alimenter le climatiseur AC à partir de la citerne F via les vannes V18 et V19.
■ Mode 8 : Réchauffer le milieu géothermique à partir du capteur solaire thermique CTh via les vannes V15, V5, V4, V3, sonde 6, vannes V2, V1, V10.
■ Mode 9 : Refroidir le milieu géothermique par l'échangeur aérothermique Ath via les vannes V22, V21, sonde 6, vannes V20, V23.

Lorsque le liquide caloporteur arrive à la vanne V15 en provenance de l'échangeur aérothermique Ath fonctionnant en capteur, ou en provenance du capteur solaire thermique CTh et en direction de la vanne 5 d'entrée dans la pompe à chaleur HP2, il peut selon la position de la vanne V15 passer dans le ballon 22 pour chauffer ou préchauffer l'eau chaude sanitaire puis par la vanne V16 pour rejoindre la vanne V5.

Beaucoup des Modes décrits sont compatibles entre eux, on citera non limitativement : Modes1+2+6, Modes1+3°6, Modes 2+5.1+6+7, Modes 4+6 ou 6.1+7+8, Modes5+6.1+7, Modes 1.1+2 etc. Le Mode 8 est compatible avec la plupart des Modes n'utilisant pas le capteur solaire thermique CTh et le Mode 9 est compatible avec la plupart des Modes n'utilisant pas l'échangeur aérothermique Ath.

Un automate 23 pilote les équipements de collecte, de transformation, les vannes et les pompes (non représentées) et éventuellement certains équipements d'utilisation de façon à répondre en temps réel à la demande d'énergie sous ses différentes formes (électricité, eau chaude sanitaire, chauffage, rafraîchissement, stockage et déstockage). L'automate 23 et/ou des commandes locales automatiques et/ou manuelles commandent la mise en service et l'arrêt des équipements d'utilisation et l'automate active sélectivement les autres équipements pour satisfaire de façon optimale la demande des différentes formes d'énergie (thermique, frigorifique, électrique, sanitaire).

Un ensemble de pilotage 24 définit le ou les modes de fonctionnement à mettre en oeuvre à un instant d'intervention en fonction de paramètres tels que climatiques, économiques, ou relatifs à l'état de l'installation, notamment la température des structures de stockage, dans le sens d'une optimisation au regard de certains critères par exemple économiques et/ou environnementaux. L'automate 23, confronté par exemple à une certaine demande de puissance en provenance du module de chauffage, met en oeuvre une préconisation fournie par l'ensemble de pilotage 24 et concernant le moyen optimal de satisfaire cette demande. Autre exemple, si le capteur solaire photovoltaïque CPh fournit de l'électricité, l'ensemble de pilotage préconise l'utilisation optimale de cette électricité, qui peut servir par exemple à alimenter une pompe à chaleur, soit pour satisfaire un besoin de chauffage ou d'eau chaude sanitaire, soit pour réchauffer le contenu de la citerne St ou le milieu géothermique, soit pour accumuler du froid dans la citerne F. Les préconisations délivrées par l'ensemble de pilotage peuvent être fournies sous forme de possibilités alternatives ou cumulatives avec des rangs de priorité. Il faut en effet éviter que l'automate 23 soit empêché de répondre à une demande en raison de préconisations excessivement autoritaires de l'ensemble de pilotage 24. L'installation doit de préférence être opérationnelle ou même pleinement opérationnelle du point de vue des occupants du bâtiment même si un équipement atteint sa limite de puissance ou est défaillant.

Suivant l'invention la régulation comprend une prise en compte de prévisions concernant l'un au moins des paramètres, lesdites prévisions portant sur une période postérieure audit instant d'intervention. Les paramètres pour lesquels les prévisions peuvent être prises en compte sont typiquement tout ou partie de la liste suivante : température extérieure, ensoleillement, vitesse du vent, prix d'achat de l'énergie, prix de revente de l'énergie, paramètres environnementaux, degré d'occupation de l'immeuble, température des structures de stockage, etc.

Les prévisions relatives aux paramètres climatiques, environnementaux et aux tarifs de l'énergie applicables dans la période à venir sont disponibles sous une forme pouvant directement alimenter une ou plusieurs entrées 31 de l'ensemble de pilotage 24. En pratique l'entrée 31est typiquement un raccordement à un serveur via internet, sa représentation à la Figure 1 est purement illustrative.

Ainsi par exemple, si en cours de période ensoleillée au mois de Mai la météorologie annonce un refroidissement exceptionnel début Juin, le système préconise l'utilisation de l'énergie solaire pour stocker de la chaleur dans le milieu géothermique, tout en stockant de la chaleur dans la citerne St à partir de l'échangeur aérothermique Ath, en vue d'utiliser ces stocks de chaleur pendant la période de refroidissement. Au contraire, à cette période de l'année, en l'absence de refroidissement annoncé, on utilisera plutôt l'énergie électrique photovoltaïque pour refroidir le milieu géothermique ou la citerne F en prévision des besoins de climatisation.

Autre exemple, en hiver une période de grand froid est annoncée, accompagnée d'un relèvement des tarifs de l'énergie du réseau public : on actionne les pompes à chaleur avec de l'électricité du réseau public pour renforcer le stock géothermique et le stock thermique dans la citerne et même dans le bâtiment lui-même en le surchauffant légèrement, par exemple jusqu'à 22°C avant la période de grand froid. Pendant la période de grand froid on mettra fortement à contribution les stocks pour assurer les besoins en chauffage et eau chaude sanitaire tout en réduisant le plus possible le recours à l'électricité chère. La mise à contribution des stocks pourra notamment consister à laisser diminuer la température à l'intérieur du bâtiment, par exemple de 22°C jusqu'à 18°C.

Troisième exemple, une période de forte chaleur est annoncée, signifiant que la climatisation utilisant l'atmosphère comme source chaude va être peu efficace. Le système préconise l'utilisation d'au moins une pompe à chaleur même de nuit pour refroidir la citerne F en rejetant les calories dans la citerne St ou, si elle est à sa température maximale, dans l'atmosphère, de façon à constituer une réserve de froid qui rendra plus efficace la climatisation pendant la période de canicule. Dans un tel cas on peut aussi utiliser une pompe à chaleur pour faire baisser la température du milieu géothermique, même en-dessous de sa limite inférieure de sécurité, sachant que le fort besoin de climatisation à venir ramènera la température dans la fourchette souhaitée.

Une option très avantageuse consiste ainsi à activer une pompe à chaleur telle que HP3 dans l'exemple pour accroître la quantité de phase solide dans la citerne F, et accroître ainsi la réserve de froid qui sera disponible pendant la période de forte chaleur. Le refroidissement du milieu géothermique, moins adaptée à un usage à court terme compte-tenu de l'évolution de la température du milieu géothermique qui est très lente, ne sera préconisé que pour accroître la puissance d'accumulation et/ou pour le cas où le contenu de la citerne F serait entièrement congelé.

La prise en compte de prévisions n'est pas nécessairement limitée à des considérations climatiques ou pécuniaires. En hiver, si un pic de pollution est annoncé, le système peut préconiser un stockage accru dans le milieu géothermique, la citerne St et/ou le bâtiment lui-même en tant que structure de stockage thermique par des moyens électriques même relativement coûteux (résistance 16) pour éviter de devoir recourir à une combustion pendant le pic de pollution.

Jusqu'à présent la prise en compte de prévisions a été décrite dans des exemples de relativement court terme, la prévision ayant un caractère évènementiel, plus ou moins exceptionnel, et portant sur une période imminente. L'invention n'est pas limitée à cela. Elle peut également exploiter des prévisions telles que des prévisions météorologiques à moyen terme (quelques mois), et des prévisions à long terme sous forme de moyennes annuelles de température extérieure, de vitesse du vent (sachant que le vent augmente les besoins de chauffage en période de chauffage), d'ensoleillement (dont dépend la puissance des capteurs photovoltaïques et des capteurs solaires thermiques ainsi que le besoin de chauffage et de climatisation), d'occupation du bâtiment (dont dépend la demande d'énergie dans le bâtiment) etc. Ainsi par exemple dans certaines régions Février est froid mais ensoleillé, ce qui permet d'escompter une production photovoltaïque plus élevée que Mars souvent pluvieux.

Les prévisions à court, moyen et long terme peuvent être combinées. Les prévisions à long terme sont une base de détermination des préconisations valables pour chaque instant. Mais bien avant chaque instant cette base est affinée en fonction des prévisions à moyen terme. De plus, dans une réalisation préférée, au moins en certains instants relativement rapprochés, tous les quarts d'heure dans un mode de réalisation particulièrement préféré, les préconisations sur une courte période imminente sont corrigées en fonction des prévisions à court terme. Les préconisations transmises à l'automate sont celles définies d'après les prévisions à long terme, possiblement affinées d'après les prévisions à moyen terme, et possiblement corrigées d'après les prévisions à court terme.

Dans l'exemple représenté l'ensemble de pilotage comprend un régulateur local 26 et un régulateur central 27 avec lequel le régulateur local est relié par exemple par Internet, GPRS, WiFi, liaison filaire, etc.. Le régulateur central 27 peut être commun à plusieurs bâtiments et être opéré par exemple par un prestataire. Le régulateur central 27 reçoit les prévisions soit de façon automatique par télécommunications si les prévisions sont disponibles sous cette forme, soit par saisie manuelle dans le cas contraire.

Le régulateur central 27 élabore les préconisations telles qu'elles résultent des prévisions à court et moyen terme, et les transmet au régulateur local 26. En outre, certaines prévisions sont transmises du régulateur central 27 au régulateur local 26, notamment les prévisions à court terme. Le régulateur local 26 reçoit également des informations locales, par exemple la température T_{G} mesurée par une sonde à proximité des sondes 6, ou encore la température du liquide caloporteur dans la citernes St ou la proportion de phase solide dans la citerne F, par des sondes non représentées. Le régulateur local 26 corrige au besoin les préconisations reçues en fonction des prévisions à court terme, et transmet à l'automate 23 les préconisations, le cas échéant ainsi corrigées.

Le régulateur local 26 opère à relativement haute fréquence, par exemple tous les quarts d'heure, un contrôle de la pertinence des préconisations au regard des mesures courantes et des prévisions à court terme. La réactualisation ainsi opérée ne porte que sur les préconisations portant sur la période imminente, par exemple les quinze jours suivant l'instant courant. Cette fréquence relativement élevée de contrôle et le cas échéant de réactualisation est avantageuse car les préconisations varient assez fortement d'un moment à un autre d'une même journée. La puissance de calcul nécessaire pour ces réactualisations à haute fréquence sur une période limitée est moindre que celle nécessitée par les réactualisations à moyen et long terme.

Le régulateur central 27 effectue les réactualisations à moyen et long terme. Il reçoit du régulateur local 26 des informations notamment relatives aux réactualisations à court terme. En particulier, les réactualisations à court terme peuvent diverger des préconisations à moyen et long terme. Le régulateur central 27 établit une solution de continuité entre l'ensemble des préconisations à moyen terme et les prévisions à court terme réactualisées.

Dans un mode de mise en oeuvre préféré de l'invention, on établit avant la mise en service un scénario basé sur des prévisions à long terme elles-mêmes basées sur les normales climatiques du lieu où est implanté le bâtiment, des données concernant son site d'implantation notamment en termes d'ensoleillement, exposition au vent, les équipements du bâtiment en termes de chauffage, climatisation, production d'eau chaude, constitution de réserves thermiques, consommation d'électricité etc., l'utilisation prévue du bâtiment. Ce scénario édicte pour chaque instant d'intervention (par exemple un instant d'intervention tous les quarts d'heure) de l'année entière à venir l'ensemble des préconisations concernant cet instant. Les préconisations afférentes à chacun des instants d'intervention faisant l'objet du scénario visent à une optimisation du fonctionnement de l'installation non seulement à l'instant considéré mais aussi en tenant compte du futur à court, moyen et long termes par rapport à l'instant considéré.

Lors de la conception d'un bâtiment, ou en vue de la rénovation de l'installation énergétique d'un bâtiment existant, il est usuel en France et dans certains autres pays d'établir une « Simulation Thermique Dynamique » (STD) qui constitue une prévision à long terme (typiquement sur une année entière) des besoins thermiques du bâtiment, en termes de chauffage, climatisation, eau chaude sanitaire etc. en fonction de paramètres tels que la climatologie du lieu, le site d'implantation précis, plus ou moins exposé au soleil ou au vent etc. Dans un mode de mise en oeuvre préféré de l'invention, cette STD (ou son équivalent dans d'autres pays) est l'un des éléments pour l'établissement du scénario. D'autres éléments sont l'utilisation prévue du bâtiment. Par exemple, on sait qu'un immeuble de bureaux est moins occupé le week-end, et utilisera moins d'eau chaude sanitaire même pendant la semaine, un hôtel en zone touristique aura une occupation particulièrement forte à certaines périodes de l'année etc. Certains types de bâtiment peuvent avoir simultanément besoin de chauffage pour certaines zones et de rafraîchissement pour d'autres zones, etc.

A la mise en service du bâtiment équipé de son installation, l'ensemble de pilotage 24 applique le scénario en commençant par l'instant précis (date et heure) de l'année correspondant à la mise en service, puis le scénario est perpétué pour une année glissante à partir de l'instant courant.

En même temps, en fonction des prévisions à court terme, le scénario est réactualisé pour la courte période à venir, par exemple pour les quinze jours qui suivent.

Ainsi réactualisé pour le court terme, le scénario de l'avenir immédiat (par exemple les quinze jours qui suivent l'instant courant) ne se raccorde pas nécessairement au scénario annuel en vigueur à cet instant. Le scénario réactualisé à court terme, ainsi que des prévisions à moyen terme, sont pris en compte pour la réactualisation à moyen terme, laquelle se termine par un raccordement avec le scénario annuel. La réactualisation à moyen terme se fait à fréquence bien plus basse, par exemple tous les quelques jours, typiquement tous les mois, que la réactualisation à court terme.

Le scénario à long terme, par exemple pour une année glissante, peut varier si certains paramètres « permanents » évoluent. Par exemple les normales climatiques peuvent évoluer, l'exposition du bâtiment au soleil ou au vent peut changer, de même que son utilisation ou encore ses équipements (par exemple construction d'une piscine), ou bien encore les habitudes des occupants (transformation d'un immeuble d'habitation en immeuble de bureaux ou inversement par exemple). La prise en compte de ce genre d'évolutions dans le scénario annuel peut se faire de différentes manières. Dans certains cas l'installation de nouveaux équipements affecte la liste des commandes pouvant faire l'objet de préconisations, par exemple une piscine peut en même temps constituer une réserve thermique et une nouvelle variable d'optimisation énergétique. Dans d'autres cas, par exemple l'évolution des normales climatiques, une saisie automatique est possible. Indépendamment des premiers cas cités, il est préféré selon l'invention que l'ensemble de pilotage comporte une fonction d'apprentissage automatique (« Machine Learning »).

Par exemple l'évolution réelle des besoins du bâtiment en fonction du jour de la semaine ou de la période de l'année peut être comparée à ce que prévoit le scénario annuel et au besoin corrigé, notamment en cas de divergence persistante entre le scénario annuel et la réalité observée. Enfin on peut également envisager de modifier « manuellement » le scénario, autrement dit par une initiative humaine. Par exemple une nouvelle STD peut être établie, et à partir de celle-ci un nouveau scénario annuel.

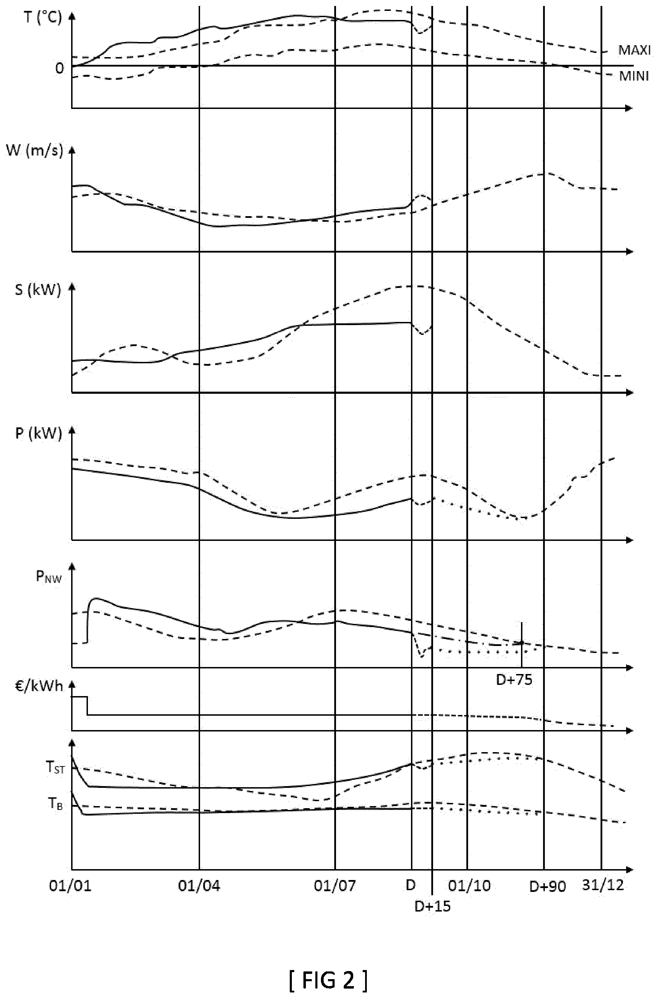

La Figure 2 illustre partiellement ce qui vient d'être décrit. Le scénario annuel est représenté par des traits tiretés, la réalité observable jusqu'à un instant D est représentée par un trait continu. Le scénario réactualisé à court terme (pointillés serrés) s'étend jusqu'à D+15 (D+15 jours), et le scénario réactualisé à moyen terme (pointillés plus espacés) jusqu'à D+90 (D+90 jours). Pour des raisons évidentes il n'est pas possible de représenter le scénario annuel quart d'heure par quart d'heure. On a choisi de représenter dans l'ordre de haut en bas de la figure :
■ Température extérieure T MAXI et T MINI de chaque journée selon le scénario annuel.
■ Température T MAXI observée jusqu'à D, puis prévision jusqu'à D+15.
■ Vitesse du vent W selon le scénario annuel, ainsi que celle observée jusqu'à D et prévue jusqu'à D+15 selon les prévisions à court terme.
■ Ensoleillement S selon le scénario annuel, ainsi que celui observé jusqu'à D et prévu jusqu'à D+15 selon les prévisions à court terme.
■ Puissance électrique P nécessaire dans l'installation selon le scénario annuel, ainsi que celle observée jusqu'à D et prévue jusqu'à D+15 selon les prévisions à court terme.
■ Puissance électrique P_{NW} fournie par le réseau public selon le scénario annuel, ainsi que celle observée jusqu'à D et prévue jusqu'à D+15 selon les prévisions à court terme.
■ Tarif de l'électricité €/kW observé jusqu'à D et prévu jusqu'à D+90.
■ Température Tst dans la citerne St selon le scénario annuel, ainsi que celle observée jusqu'à D et prévue jusqu'à D+90 selon les prévisions à court et moyen terme.
■ Température T_{B} du bâtiment selon le scénario annuel, ainsi que celle observée jusqu'à D et prévue jusqu'à D+90 selon les prévisions à court et moyen terme.
■ Température T_{G} dans le milieu géothermique 2 selon le scénario annuel, ainsi que celle observée jusqu'à D et prévue jusqu'à D+90 selon les prévisions à court et moyen terme.

Dans l'exemple ainsi représenté, une période de grand froid s'est produite en début d'année. Le tarif de l'électricité €/kW a été accru. Le système a réussi à réduire la consommation de puissance en provenance du réseau public (P_{NW}). Pour cela la température T_{B} du bâtiment et Tst de la citerne ont été relevées par anticipation puis ces températures ont fortement chuté pendant la période de grand froid pour que les calories correspondantes servent à compenser les déperditions thermiques du bâtiment.

Les diagrammes de la Figure 2 concernent plus particulièrement un instant courant D vers le milieu de l'été. L'été a été relativement frais si bien que les besoins de climatisation, et les besoins de puissance P en général, ont été inférieurs à ceux prévus par le scénario annuel. Une période particulièrement fraîche et ventée est prévue pour les prochains jours, jusqu'à D+15. La citerne St et le bâtiment ne pourront pas être chauffés autant que prévu par le scénario annuel en prévision de l'automne. Le scénario corrigé à court terme diverge du scénario en vigueur. Le scénario réactualisé à moyen terme jusqu'à D+90 organise une jonction avec le scénario annuel à D+90. Pour ne pas charger tous les diagrammes on a représenté seulement pour celui relatif à la puissance P, en trait mixte, le scénario réactualisé à moyen terme précédent, jusqu'à D+75 où il rejoignait le scénario annuel, et qui était précédemment suivi par l'installation jusqu'à la date D de l'annonce du refroidissement.

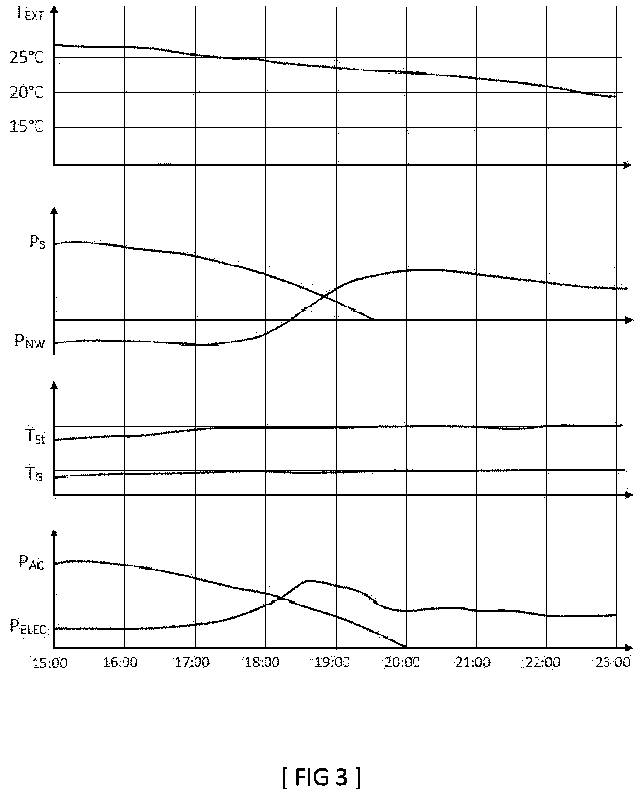

La Figure 3 représente, pour quelques paramètres, leur évolution au cours d'une partie d'une journée, de 15 heures à 23 heures (3 p.m. à 11 p.m.). la température extérieure T_{EXT} baisse de 25°C à 18°C, la puissance Ps fournie par le capteur solaire photovoltaïque CPh s'annule vers 19h30, la puissance P_{NW} fournie par le réseau subit un pic en fin d'après-midi quand les climatiseurs fonctionnent encore et des besoins propres à cette partie de la journée (douches, préparations culinaires, éclairage etc.) apparaissent mais ne peuvent plus être assurés par énergie solaire. Dans ce cas particulier la puissance échangée avec le réseau de distribution public P_{NW} est négative en début de période car le capteur photovoltaïque CPh injecte du courant dans le réseau public. En même temps la température Tst de la citerne augmente à partir de chaleur provenant du capteur aérothermique. La température du milieu géothermique augmente du fait des rejets thermiques dus à la climatisation. Les diagrammes de la Figure 3 illustrent par voie d'exemple à quel point les préconisations pertinentes varient d'un moment à l'autre de la journée, d'où l'intérêt d'un scénario très finement découpé dans le temps, par exemple quart d'heure par quart d'heure.

Suivant un autre aspect de l'invention, un nouveau procédé de conception d'une installation énergétique dans un bâtiment est proposé. Connaissant le cahier des charges du bâtiment ou plus généralement les contraintes qui s'appliquent à la conception de cette installation, le procédé comprend les étapes suivantes :
■ En fonction de la simulation thermique dynamique du bâtiment, d'une utilisation prévue du bâtiment et d'une climatologie annuelle du site d'implantation du bâtiment, on établit un chronogramme annuel des divers besoins énergétiques du bâtiment.
■ On se dote d'un catalogue d'équipements de collecte, de transformation, de stockage et d'utilisation d'énergie compatibles avec le chronogramme, et avec des données relatives au cahier des charges du bâtiment. Par exemple, on tient compte des possibilités techniques locales, par exemple possibilité ou non d'installer de la géothermie, sur quelle superficie, profondeur, nature du terrain. On prend par exemple en compte les contraintes budgétaires pour l'investissement, l'exploitation ou une combinaison des deux sachant que dans bien des projets on accepte un investissement plus élevé si cela permet de diminuer le coût d'exploitation, la possibilité ou non d'installer une ou plusieurs citernes telles que St ou F de la Figure 1.
■ Des itérations informatiques testent virtuellement différentes combinaisons d'équipements du catalogue, chacun dans différents dimensionnements de certains de leurs paramètres, pour déterminer celles capables de satisfaire au moins en grande partie le chronogramme. Les itérations peuvent partir d'une combinaison d'équipements, chacun dans des dimensionnements intermédiaires, concernant des équipements a priori les plus favorables sur les plans budgétaires et/ou écologiques, comme la géothermie, le solaire thermique, le photovoltaïque, les pompes à chaleur, l'échangeur aérothermique, les réserves thermiques, puis insérer d'autres types d'équipements pour assurer le complément des besoins, et à partir de là réduire la part des premiers et faire monter la part des seconds jusqu'à satisfaction des besoins. Au total, des milliers de combinaisons peuvent être explorées à la manière d'une matrice à n dimensions. Pour un même type d'équipement, par exemple les sondes géothermiques, les différents dimensionnements explorés peuvent porter sur plusieurs paramètres de dimensionnement, par exemple nombre de sondes, profondeur d'implantation, espacement, etc.

■ Pour évaluer l'aptitude de chaque combinaison possible à satisfaire les besoins, on établit son scénario horodaté et on détecte le cas échéant son incapacité à couvrir les besoins avec une marge de sécurité suffisante à telle ou telle période de l'année, ou au contraire un excès de performance permettant d'envisager une solution plus économique qui serait suffisante.
■ Puis on sélectionne l'une de ces combinaisons déterminées et le scénario horodaté correspondant, on construit l'installation correspondant à la combinaison sélectionnée, et on met l'installation en service conformément audit scénario horodaté.

Bien entendu l'invention n'est pas limitée aux exemples décrits et représentés, elle est définie par les revendications.

L'installation représentée à la Figure 1 n'est qu'un exemple et n'est en outre qu'une vision très schématisée d'une installation réelle qui comporterait bien plus qu'un équipement de chaque sorte, bien plus qu'une sonde géothermique, par exemple jusqu'à plus de 100 sondes, et concernerait souvent plus qu'un seul bâtiment etc.

L'invention est applicable à des complexes immobiliers de natures très diverses. Dans certains cas, on a besoin simultanément de chaud (pour l'habitat, les bureaux,...) et de froid (par exemple pour un entrepôt frigorifique), comme cela est permis par certains des Modes 1 à 7 décrits plus haut. Dans d'autres cas, on n'a besoin que de chaud (pays froids), ou quasiment que de froid (pays chauds). L'invention est compatible avec tous ces cas particuliers.

De façon non représentée, les équipements peuvent comporter des chaudières d'appoint par exemple à gaz, servant par exemple à chauffer un ballon tel que 17 ou un ballon d'eau chaude sanitaire tel que 12 ou 13, ou contribuer au chauffage d'un tel ballon.

## Revendications

1. Procédé pour fournir de l'énergie notamment thermique dans au moins un bâtiment ou analogue (1) au moyen d'une installation comprenant :
- des équipements de collecte d'énergie (CPh, CTh, Ath, 6, 8) qui sont en relation de transfert d'énergie chacun avec une source respective ;
- des équipements de transformation d'énergie (HP1, HP2, HP3, 14, 16) alimentés au moins en partie par les équipements de collecte ;
- des équipements utilisateurs d'énergie (AC, Ht, 18, 19, 21, 22) ;
- une structure de stockage d'énergie thermique (6,St,F);
procédé dans lequel on opère une régulation plaçant les équipements dans des états d'activation respectifs choisis en fonction de la demande et de paramètres notamment climatiques, dans le sens d'une optimisation au regard d'au moins un critère,
et dans lequel, à un instant (D) d'intervention de la régulation, la régulation comprend une prise en compte de prévisions concernant l'un au moins des paramètres, lesdites prévisions portant sur une période postérieure audit instant d'intervention,
l'au moins un paramètre faisant l'objet de la prise en compte de prévisions comprenant un paramètre d'état (T_{St}, T_{G}, T_{B}) de ladite structure de stockage (6, St, F),
**caractérisé en ce que** le procédé comprend les étapes suivantes :
- avant la mise en service de l'installation, sur la base de données relatives au bâtiment (1), à son utilisation prévue, et à son environnement géographique et climatique, établir un scénario horodaté des flux énergétiques des différents équipements, dans un sens d'optimisation sur la période couverte par le scénario ;
- en service, procéder à une collecte d'informations plus récentes que les données, et à une réactualisation du scénario en fonction desdites informations ; les informations collectées comprenant des prévisions météorologiques et/ou relatives à l'occupation du bâtiment,
la réactualisation du scénario faisant intervenir un apprentissage basé sur un traitement établissant une corrélation temporelle entre des besoins énergétiques passés observés dans le bâtiment, et des paramètres, notamment météorologiques et calendaires.
- en service, exécuter le scénario dans sa version la plus récente,
et **en ce que** les états d'activation définis par le procédé à un instant donné sont élaborés pour prévenir des difficultés futures ou profiter d'opportunités futures que l'on peut anticiper sur la base d'informations accessibles.

2. Procédé selon la revendication 1, **caractérisé en ce que** la régulation définit une succession dans le temps de combinaisons d'états d'activation de certains au moins des équipements sur une durée postérieure à l'instant d'intervention, dans un sens d'optimisation sur la durée au regard de l'au moins un critère.

3. Procédé selon la revendication 1 ou 2, **caractérisé en ce que** l'au moins un paramètre faisant l'objet de la prise en compte de prévisions comprend au moins un paramètre climatique parmi la température extérieure (T_{EXT}), l'ensoleillement (S), la vitesse du vent (W).

4. Procédé selon l'une des revendications 1 à 3, **caractérisé en ce que** l'au moins un paramètre faisant l'objet de la prise en compte de prévisions comprend un prix de l'énergie (€/kW) en provenance de l'une des sources (7).

5. Procédé selon l'une des revendications 1 à 4, **caractérisé en ce que** l'au moins un paramètre faisant l'objet de la prise en compte de prévisions comprend un paramètre d'état (T_{G}) de l'une des sources.

6. Procédé selon l'une des revendications 1 à 5, **caractérisé en ce que** la prise en compte de prévisions est opérée au moins en partie par un état d'activation faisant varier le contenu énergétique d'au moins une structure de stockage énergétique (1, 2, St, F).

7. Procédé selon l'une des revendications 1 à 6, **caractérisé en ce que** l'on prend en compte le bâtiment (1) en tant que structure de stockage.

8. Procédé selon l'une des revendications 1 à 7, **caractérisé en ce qu'**on prend en compte en tant que structure de stockage un milieu géothermique (2) équipé de sondes géothermiques (6) faisant partie desdits équipements de collecte.

9. Procédé selon la revendication 8, **caractérisé en ce que** la prise en compte de prévisions comprend une prévision de réaction du milieu géothermique (2) à un échange thermique avec des sondes géothermiques (6) faisant partie des équipements de collecte.

10. Procédé selon la revendication 9, **caractérisé en ce qu'**avant la mise en service de l'installation on procède à des tests de réponse thermique du milieu géothermique (2) à des échanges thermiques au moyen d'une sonde-test.

11. Procédé selon l'une des revendications 1 à 10, **caractérisé en ce que** l'au moins une structure de stockage comprend une citerne (F) dont le contenu énergétique varie par variation de la proportion de phase solide d'un corps contenu dans la citerne.

12. Procédé selon l'une des revendications 1 à 11, **caractérisé en ce que** la régulation prend en compte les prévisions en des instants d'intervention successifs, séparés par des tranches de temps, les tranches de temps étant de préférence de l'ordre du quart d'heure.

13. Procédé selon l'une des revendications 1 à 12, **caractérisé en ce que** la régulation comporte une régulation-maître (24) mettant en oeuvre la prise en compte des prévisions pour élaborer des préconisations, et un automate (23) commandant les équipements en fonction de la demande énergétique instantanée et des préconisations reçues de la régulation-maître.

14. Procédé selon l'une des revendications 1 à 13, **caractérisé en ce que** les informations collectées comprennent une mesure de température (T_{G}) dans un milieu géothermique (2) équipé de sondes géothermiques (6) faisant partie des équipements de collecte.

15. Procédé selon l'une des revendications 1 à 14, **caractérisé en ce que** la réactualisation du scénario comprend :
- une réactualisation à haute fréquence, typiquement tous les quarts d'heure, et réactualisant le scénario sur les quelques jours qui suivent l'instant de réactualisation ; et
- une réactualisation à basse fréquence, typiquement tous les quelques jours, réactualisant la totalité du scénario.

16. Procédé selon l'une des revendications 1 à 15, **caractérisé en ce qu'**avant d'établir le scénario, on exécute les étapes suivantes :
- en fonction d'une simulation thermique dynamique du bâtiment, d'une utilisation prévue du bâtiment et d'une climatologie annuelle du site d'implantation du bâtiment, établir un chronogramme annuel des divers besoins énergétiques du bâtiment ;
- se doter d'un catalogue d'équipements de collecte, de transformation d'utilisation et/ou de stockage d'énergie compatibles avec le chronogramme, et avec des données relatives au cahier des charges du bâtiment ;
- par itérations informatiques tester virtuellement différentes combinaisons d'équipements du catalogue et de dimensionnements de ces équipements pour déterminer celles capables de satisfaire au moins en grande partie le chronogramme ;
- établir le scénario horodaté de chacune des combinaisons déterminées comme capables de satisfaire le chronogramme ;
- sélectionner l'une de ces combinaisons déterminées et le scénario horodaté correspondant, et
- construire l'installation correspondant à la combinaison sélectionnée.

17. Installation pour fournir de l'énergie notamment thermique dans au moins un bâtiment ou analogue, l'installation comprenant :
- des équipements de collecte d'énergie (Cph, CTh, Aₜₕ, 6, 8) qui sont en relation de transfert d'énergie chacun avec une source respective;
- des équipements de transformation d'énergie (HP1, HP2, HP3, 14, 16) alimentés au moins en partie par les équipements de collecte ;
- des équipements utilisateurs d'énergie (AC, Ht, 18, 19, 21, 22) ;
- une structure de stockage d'énergie thermique (6,St,F);
- un système de régulation (24) capable de définir pour certains au moins des équipements différents états d'activation respectifs choisis en fonction de paramètres notamment climatiques, dans le sens d'une optimisation au regard de critères,
**caractérisée en ce que** le système de régulation est configurée pour mettre en oeuvre un procédé selon l'une des revendications 1 à 16.

18. Installation pour fournir de l'énergie notamment thermique dans au moins un bâtiment ou analogue, l'installation comprenant :
- des équipements de collecte d'énergie (CPh, STh, Aₜₕ, 6, 8) qui sont en relation de transfert d'énergie chacun avec une source respective;
- des équipements de transformation d'énergie (HP1, HP2, HP3, 14, 16) alimentés au moins en partie par les équipements de collecte ;
- des équipements utilisateurs d'énergie (AC, Ht, 18, 19, 21, 22) ;
- une structure de stockage d'énergie thermique (6,St,F);
- un système de régulation (24) capable de définir pour certains au moins des équipements différents états d'activation respectifs choisis en fonction de paramètres notamment climatiques, dans le sens d'une optimisation au regard de critères,
**caractérisée en ce que** le système de régulation a été configurée et opère selon un procédé conforme à la revendication 16.

19. Système pour la régulation d'une installation destinée à fournir de l'énergie notamment thermique dans au moins un bâtiment ou analogue, cette installation comprenant :
- des équipements de collecte d'énergie (CPh, CTh, Aₜₕ, 6, 8) qui sont en relation de transfert d'énergie chacun avec une source respective;
- des équipements de transformation d'énergie (HP1, HP2, HP3, 14, 16) alimentés au moins en partie par les équipements de collecte ;
- des équipements utilisateurs d'énergie (AC, Ht, 18, 19, 21, 22) ;
- une structure de stockage d'énergie thermique (6,St,F);
le système de régulation étant capable de définir pour certains au moins des équipements différents états d'activation respectifs choisis en fonction de paramètres notamment climatiques, dans le sens d'une optimisation au regard de critères, **caractérisé en ce que** le système de régulation est conçu pour mettre en oeuvre dans l'installation un procédé selon l'une des revendications 1 à 16.

20. Installation selon la revendication 17 ou 18, ou système de régulation selon la revendication 19, caractérisé(e) en ce que le système de régulation comporte au moins une entrée (31) capable de recevoir des prévisions portant sur une période postérieure à l'instant courant, l'installation étant conçue pour prendre en compte lesdites prévisions dans le cadre de la prise en compte.

21. Installation selon la revendication 17 ou 18, ou système de régulation selon la revendication 19, caractérisé(e) en ce que le système de régulation comprend au moins un ensemble de pilotage (24) qui élabore des préconisations prenant en compte les prévisions, les préconisations étant destinées à un automate qui reçoit les préconisations ainsi que des informations relatives à la demande énergétique, et commande certains au moins des équipements en fonction de la demande énergétique et des préconisations.

## Patentansprüche

1. Verfahren zur Bereitstellung von Energie, insbesondere Wärmeenergie, in mindestens einem Gebäude oder dergleichen (1) mittels einer Anlage, welche aufweist:
- Energiesammelvorrichtungen (CPh, CTh, Ath, 6, 8), welche jeweils mit einer jeweiligen Quelle in Energieübertragungsbeziehung stehen;
- Energieumwandlungsvorrichtungen (HP1, HP2, HP3, 14, 16), welche zumindest teilweise von den Sammelvorrichtungen gespeist werden;
- Energieverbrauchervorrichtungen (AC, Ht, 18, 19, 21, 22);
- eine Wärmeenergiespeicherstruktur (6, St, F);
wobei bei dem Verfahren eine Regelung durchgeführt wird, bei welcher die Vorrichtungen in jeweilige Aktivierungszustände versetzt werden, welche in Abhängigkeit von dem Bedarf und insbesondere klimatischen Parametern ausgewählt werden, im Sinne einer Optimierung hinsichtlich mindestens eines Kriteriums,
und wobei die Regelung in einem Eingriffsmoment (D) der Regelung eine Berücksichtigung von Prognosen hinsichtlich mindestens eines Parameters aufweist, wobei die Prognosen einen Zeitraum nach dem Eingriffsmoment betreffen,
wobei der mindestens eine Parameter, der Gegenstand der Berücksichtigung von Prognosen ist, ein Zustandsparameter (T_{ST}, T_{G}, T_{B}) der Speicherstruktur (6, St, F) ist,
**dadurch gekennzeichnet, dass** das Verfahren die folgenden Schritte aufweist:
- vor der Inbetriebnahme der Anlage, Erstellen, auf der Basis von Daten, welche das Gebäude (1), dessen vorgesehene Nutzung und dessen geographische und klimatische Umgebung betreffen, eines mit einem Zeitstempel versehenen Szenarios der Energieflüsse der verschiedenen Vorrichtungen, im Sinne einer Optimierung des von dem Szenario abgedeckten Zeitraums;
- im Betrieb, Sammeln von Informationen, welche neuer sind als die Daten, und Aktualisieren des Szenarios in Abhängigkeit von den Informationen;
wobei die gesammelten Informationen meteorologische und/oder die Belegung des Gebäudes betreffende Prognosen aufweisen,
wobei das Aktualisieren des Szenarios einen Lernvorgang bewirkt, basierend auf einer Verarbeitung, welche eine zeitliche Korrelation zwischen dem in dem Gebäude beobachteten vergangenen Energiebedarf und Parametern, insbesondere meteorologischen und kalendarischen, herstellt,
- im Betrieb, Ausführen des Szenarios in seiner aktuellsten Version,
und dass die zu einem gegebenen Zeitpunkt durch das Verfahren definierten Aktivierungszustände erstellt werden, um zukünftige Schwierigkeiten zu verhindern oder von zukünftigen Gelegenheiten zu profitieren, welche auf der Basis von verfügbaren Informationen antizipieren kann.

2. Verfahren nach Anspruch 1, **dadurch gekennzeichnet, dass** die Regelung eine zeitliche Abfolge von Kombinationen von Aktivierungszuständen zumindest bestimmter Vorrichtungen über einen Zeitraum nach dem Eingriffsmoment, im Sinne einer zeitlichen Optimierung hinsichtlich des mindestens einen Kriteriums.

3. Verfahren nach Anspruch 1 oder 2, **dadurch gekennzeichnet, dass** der mindestens eine Parameter, welcher Gegenstand der Berücksichtigung von Prognosen ist, mindestens einen klimatischen Parameter unter der Außentemperatur (T_{EXT}), der Sonneneinstrahlung (S) und der Windgeschwindigkeit (W) umfasst.

4. Verfahren nach einem der Ansprüche 1 bis 3, **dadurch gekennzeichnet, dass** der mindestens eine Parameter, welcher Gegenstand der Berücksichtigung von Prognosen ist, einen Preis (€/kW) der aus einer der Quellen kommenden Energie umfasst.

5. Verfahren nach einem der Ansprüche 1 bis 4, **dadurch gekennzeichnet, dass** der mindestens eine Parameter, welcher Gegenstand der Berücksichtigung von Prognosen ist, einen Zustandsparameter (T_{G}) einer der Quellen umfasst.

6. Verfahren nach einem der Ansprüche 1 bis 5, **dadurch gekennzeichnet, dass** die Berücksichtigung von Prognosen zumindest zum Teil durch einen Aktivierungszustand erfolgt, welcher den Energieinhalt mindestens einer Energiespeicherstruktur (1, 2, St, F) verändert.

7. Verfahren nach einem der Ansprüche 1 bis 6, **dadurch gekennzeichnet, dass** das Gebäude (1) als Speicherstruktur berücksichtigt wird.

8. Verfahren nach einem der Ansprüche 1 bis 7, **dadurch gekennzeichnet, dass** als Speicherstruktur ein geothermisches Milieu (2) berücksichtigt wird, das mit geothermischen Sonden (6) versehen ist, welche Teil der Sammelvorrichtungen sind.

9. Verfahren nach Anspruch 8, **dadurch gekennzeichnet, dass** die Berücksichtigung von Prognosen eine Prognose der Reaktion des geothermischen Milieus (2) auf einen Wärmetausch mit den geothermischen Sonden (6) umfasst, welche Teil der Sammelvorrichtungen sind.

10. Verfahren nach Anspruch 9, **dadurch gekennzeichnet, dass** vor der Inbetriebnahme der Anlage Tests der thermischen Reaktion des geothermischen Milieus (2) auf Wärmetauschvorgänge mittels einer Testsonde durchgeführt werden.

11. Verfahren nach einem der Ansprüche 1 bis 10, **dadurch gekennzeichnet, dass** die mindestens eine Speicherstruktur einen Tank (F) aufweist, dessen Energieinhalt durch Veränderung des Anteils des Festphase eines in dem Tank enthaltenen Körpers variiert.

12. Verfahren nach einem der Ansprüche 1 bis 11, **dadurch gekennzeichnet, dass** die Regelung die Prognosen in aufeinanderfolgenden Eingriffsmomenten berücksichtigt, die durch Zeitfenster getrennt sind, wobei die Zeitfenster vorzugsweise in der Größenordnung einer Viertelstunde liegen.

13. Verfahren nach einem der Ansprüche 1 bis 12, **dadurch gekennzeichnet, dass** die Regelung eine Master-Regelung (24), welche die Berücksichtigung der Prognosen implementiert, um Empfehlungen zu erstellen, und einen Automaten (23) aufweist, welcher die Vorrichtungen in Abhängigkeit von dem momentanen Energiebedarf und den von der Master-Regelung empfangenen Empfehlungen steuert.

14. Verfahren nach einem der Ansprüche 1 bis 13, **dadurch gekennzeichnet, dass** die gesammelten Informationen eine Temperaturmessung (T_{G}) in einem geothermischen Milieu (2) aufweisen, das mit geothermischen Sonden (6) versehen ist, welche Teil der Sammelvorrichtungen sind.

15. Verfahren nach einem der Ansprüche 1 bis 14, **dadurch gekennzeichnet, dass** die Aktualisierung des Szenarios umfasst:
- eine Aktualisierung mit hoher Frequenz, üblicherweise alle Viertelstunde, und Aktualisieren des Szenarios über mehrere, dem Aktualisierungszeitpunkt folgende Tage; und
- eine Aktualisierung mit niedriger Frequenz, üblicherweise alle paar Tage, wobei das gesamte Szenario aktualisiert wird.

16. Verfahren nach einem der Ansprüche 1 bis 15, **dadurch gekennzeichnet, dass** vor dem Erstellen des Szenarios die folgenden Schritte ausgeführt werden:
- Erstellen eines Jahres-Chronogramms der verschiedenen Energiebedarfe des Gebäudes in Abhängigkeit von einer dynamischen thermischen Simulation des Gebäudes, einer vorgesehenen Nutzung des Gebäudes und einer Jahresklimatologie des Gebäudestandorts;
- sich mit einem Katalog der mit dem Chronogramm und mit den das Lastenheft des Gebäudes betreffenden Daten kompatiblen Energiesammel-, Energienutzungsumwandlungs- und Energiespeichervorrichtungen ausstatten;
- durch Computeriterationen erfolgendes virtuelles Testen verschiedener Kombinationen von Vorrichtungen des Katalogs und von Dimensionierungen dieser Vorrichtungen, um diejenigen zu ermitteln, die in der Lage sind, das Chronogramm zumindest zum großen Teil zu erfüllen;
- Erstellen des zeitgestempelten Szenarios jeder der Kombinationen, die als das Chronogramm zu erfüllen in der Lage seiend ermittelt wurden;
- Wählen einer dieser ermittelten Kombinationen und des entsprechenden zeitgestempelten Szenarios, und
- Konstruieren der Anlage entsprechend der gewählten Kombination.

17. Anlage zur Bereitstellung von Energie, insbesondere Wärmeenergie, in mindestens einem Gebäude oder dergleichen, wobei die Anlage aufweist:
- Energiesammelvorrichtungen (CPh, CTh, Ath, 6, 8), welche jeweils mit einer jeweiligen Quelle in Energieübertragungsbeziehung stehen;
- Energieumwandlungsvorrichtungen (HP1, HP2, HP3, 14, 16), welche zumindest teilweise von den Sammelvorrichtungen gespeist werden;
- Energieverbrauchervorrichtungen (AC, Ht, 18, 19, 21, 22);
- eine Wärmeenergiespeicherstruktur (6, St, F);
- ein Regelungssystem (24), das in der Lage ist, für zumindest einige der Vorrichtungen jeweils unterschiedliche Aktivierungszustände zu definieren, welche in Abhängigkeit von insbesondere klimatischen Parametern im Sinne einer Optimierung hinsichtlich der Kriterien gewählt werden,
**dadurch gekennzeichnet, dass** das Regelungssystem dazu ausgebildet ist, ein Verfahren nach einem der Ansprüche 1 bis 16 zu implementieren.

18. Anlage zur Bereitstellung von Energie, insbesondere Wärmeenergie, in mindestens einem Gebäude oder dergleichen, wobei die Anlage aufweist:
- Energiesammelvorrichtungen (CPh, CTh, Ath, 6, 8), welche jeweils mit einer jeweiligen Quelle in Energieübertragungsbeziehung stehen;
- Energieumwandlungsvorrichtungen (HP1, HP2, HP3, 14, 16), welche zumindest teilweise von den Sammelvorrichtungen gespeist werden;
- Energieverbrauchervorrichtungen (AC, Ht, 18, 19, 21, 22);
- eine Wärmeenergiespeicherstruktur (6, St, F);
- ein Regelungssystem (24), das in der Lage ist, für zumindest einige der Vorrichtungen jeweils unterschiedliche Aktivierungszustände zu definieren, welche in Abhängigkeit von insbesondere klimatischen Parametern im Sinne einer Optimierung hinsichtlich der Kriterien gewählt werden,
**dadurch gekennzeichnet, dass** das Regelsystem gemäß einem Verfahren nach Anspruch 16 konfiguriert ist und arbeitet.

19. System zur Regelung einer Anlage zur Bereitstellung von Energie, insbesondere Wärmeenergie, in mindestens einem Gebäude oder dergleichen, wobei die Anlage aufweist:
- Energiesammelvorrichtungen (CPh, CTh, Ath, 6, 8), welche jeweils mit einer jeweiligen Quelle in Energieübertragungsbeziehung stehen;
- Energieumwandlungsvorrichtungen (HP1, HP2, HP3, 14, 16), welche zumindest teilweise von den Sammelvorrichtungen gespeist werden;
- Energieverbrauchervorrichtungen (AC, Ht, 18, 19, 21, 22);
- eine Wärmeenergiespeicherstruktur (6, St, F);
wobei das Regelungssystem (24) in der Lage ist, für zumindest einige der Vorrichtungen jeweils unterschiedliche Aktivierungszustände zu definieren, welche in Abhängigkeit von insbesondere klimatischen Parametern im Sinne einer Optimierung hinsichtlich der Kriterien gewählt werden,
**dadurch gekennzeichnet, dass** das Regelungssystem dazu ausgelegt ist, in der Anlage ein Verfahren nach einem der Ansprüche 1 bis 16 zu implementieren.

20. Anlage nach Anspruch 17 oder 18, oder Regelungssystem nach Anspruch 19, **dadurch gekennzeichnet, dass** das Regelungssystem mindestens einen Eingang (31) aufweist, der in der Lage ist, Prognosen zu empfangen, welche einen Zeitraum nach dem aktuellen Zeitpunkt betreffen, wobei die Anlage dazu ausgebildet ist, diese Prognosen im Rahmen der Berücksichtigung zu berücksichtigen.

21. Anlage nach Anspruch 17 oder 18, oder Regelungssystem nach Anspruch 19, **dadurch gekennzeichnet, dass** das Regelungssystem mindestens eine Vorsteuereinheit (24) aufweist, welche Empfehlungen unter Berücksichtigung der Prognosen erstellt, wobei die Empfehlungen einen Automaten betreffen, welcher die Empfehlung sowie Informationen bezüglich des Energiebedarfs empfängt, und zumindest einige der Vorrichtung in Abhängigkeit von dem Energiebedarf und den Empfehlungen steuert.

## Claims

1. Method for supplying energy, in particular thermal energy, in at least one building or the like (1) by means of an installation comprising:
- items of energy collection equipment (CPh, CTh, ATh, 6, 8) that relate to energy transfer, each with a respective source;
- items of energy transformation equipment (HP1, HP2, HP3, 14, 16), at least partially fed by the items of collection equipment;
- items of equipment that are users of energy (AC, Ht, 18, 19, 21, 22);
- a storage structure (6, St, F) of thermal energy;
method in which a regulation is operated placing the items of equipment in respective activation states chosen as a function of the demand and of parameters, in particular of climatic parameters, in the sense of optimization with respect to at least one criterion,
and wherein at an instant (D) of intervention of the regulation, the regulation comprises incorporating forecasts relating to at least one of the parameters, said forecasts concerning a period subsequent to said instant of intervention,
the at least one parameter to be incorporated into forecasts comprising a parameter of the state (Tst, T_{G}, T_{B}) of said storage structure (6, St, F),
**characterized in that** the method comprises the following steps:
- before commissioning the installation, on the basis of data relating to the building (1), to its expected use, and to its geographical and climatic environment, establishing a time-stamped scenario of the energy flows of the different items of equipment, in the sense of optimization over the period covered by the scenario,
- in service, collecting items of information that are more recent than the data, and readjusting the scenario as a function of said items of information, information collected comprising meteorological forecasts and/or those relating to occupation of the building, readjusting the scenario involving machine learning, based on processing establishing a time correlation between the past energy needs observed in the building, and parameters, in particular meteorological and calendrical,
- in service, performing the scenario in its most recent version.
And **characterized in that** the activation states defined by the method at a given instant are prepared in order to forecast future difficulties or take advantage of future opportunities that can be anticipated on the basis of accessible items of information.

2. Method according to claim 1, **characterized in that** the regulation defines a succession over time of combinations of activation states of at least some of the items of equipment over a duration subsequent to the instant of intervention, in the sense of optimization over the duration with respect to the at least one criterion.

3. Method according to claim 1 or 2, **characterized in that** the at least one parameter to be incorporated into forecasts comprises at least one climatic parameter from exterior temperature (T_{EXT}), sunshine (S), wind speed (W).

4. Method according to one of claims 1 to 3, **characterized in that** the at least one parameter to be incorporated into forecasts comprises an energy price (€/kW) originating from one of the sources (7).

5. Method according to one of claims 1 to 4, **characterized in that** the at least one parameter to be incorporated into forecasts comprises a parameter of the state (T_{G}) of one of the sources.

6. Method according to one of claims 1 to 5, **characterized in that** incorporating forecasts is operated at least partially by an activation state varying the energy content of at least one energy storage structure (1, 2, St, F).

7. Method according to one of claims 1 to 6, **characterized in that** the building (1) is incorporated as a storage structure.

8. Method according to one of claims 1 to 7, **characterized in that** a geothermal environment (2) equipped with geothermal probes (6) forming part of said items of collection equipment is incorporated as a storage structure.

9. Method according to claim 8, **characterized in that** incorporating forecasts comprises a forecast of reaction of the geothermal environment (2) to a thermal exchange with geothermal probes (6) forming part of the items of collection equipment.

10. Method according to claim 9, **characterized in that** before the commissioning of the installation, tests of the thermal response of the geothermal environment (2) to thermal exchanges are carried out by means of a test probe.

11. Method according to one of claims 1 to 10, **characterized in that** the at least one storage structure comprises a tank (F), the energy content of which varies by variation of the proportion of solid phase of a body contained in the tank.

12. Method according to one of claims 1 to 11, **characterized in that** the regulation incorporates the forecasts in successive instants of intervention, separated by time-slots, the time-slots preferably being of the order of a quarter of an hour.

13. Method according to one of claims 1 to 12, **characterized in that** the regulation comprises a main regulation (24) implementing the incorporation of the forecasts in order to prepare the recommendations, and an automatic control system (23) controlling the items of equipment as a function of the instantaneous energy demand and the recommendations received from the main regulation.

14. Method according to one of claims 1 to 13, **characterized in that** the items of information collected comprise a temperature measurement (T_{G}) in a geothermal environment (2) equipped with geothermal probes (6) forming part of the items of collection equipment.

15. Method according to one of claims 1 to 14, **characterized in that** the readjustment of the scenario comprises:
- a high-frequency readjustment, typically every quarter of an hour, and readjustment of the scenario over the several days following the instant of readjustment; and
- a low-frequency readjustment, typically every few days, readjusting the totality of the scenario.

16. Method according to one of claims 1 to 15, **characterized in that** before establishing the scenario, the following steps are performed:
- as a function of a dynamic thermal modelling of the building, of an expected use of the building and an annual climatology of the location site of the building, establishing an annual timing diagram of the various energy needs of the building;
- acquiring a catalogue of items of equipment for collection, transformation, use and/or storage of energy compatible with the timing diagram, and with data relating to the specifications of the building;
- by computerized iterations, virtually testing different combinations of items of equipment from the catalogue and dimensioning of these items of equipment in order to determine those capable of meeting at least the majority of the timing diagram;
- establishing the time-stamped scenario of each of the combinations determined as capable of meeting the timing diagram;
- selecting one of these determined combinations and the corresponding time-stamped scenario, constructing the installation corresponding to the selected combination.

17. Installation for supplying energy, in particular thermal energy, in at least one building or the like, the installation comprising:
- items of energy collection equipment (CPh, CTh, ATh, 6, 8) that relate to energy transfer, each with a respective source;
- items of energy transformation equipment (HP1, HP2, HP3, 14, 16), at least partially fed by the items of collection equipment;
- items of equipment that are users of energy (AC, Ht, 18, 19, 21, 22);
- a storage structure (6, St, F) of thermal energy;
- a regulation system (24) capable of defining for at least some of the different items of equipment, respective activation states chosen as a function of parameters, in particular climatic parameters, in the sense of optimization with respect to criteria,
**characterized in that** the regulation system is set up to implement a method according to one of claims 1 to 16.

18. Installation for supplying energy, in particular thermal energy, in at least one building or the like, the installation comprising:
- items of energy collection equipment (CPh, STh, ATh, 6, 8) that relate to energy transfer, each with a respective source;
- items of energy transformation equipment (HP1, HP2, HP3, 14, 16), at least partially fed by the items of collection equipment;
- items of equipment that are users of energy (AC, Ht, 18, 19, 21, 22);
- a storage structure (6, St, F) of thermal energy;
- a regulation system (24) capable of defining for at least some of the different items of equipment, respective activation states chosen as a function of parameters, in particular climatic parameters, in the sense of optimization with respect to criteria,
**characterized in that** the regulation system has been configured and operates in accordance with a method according to claim 16.

19. System for regulating an installation intended for supplying energy, in particular thermal energy, in at least one building or the like, this installation comprising:
- items of energy collection equipment (CPh, CTh, ATh, 6, 8) that relate to energy transfer, each with a respective source;
- items of energy transformation equipment (HP1, HP2, HP3, 14, 16), at least partially fed by the items of collection equipment;
- items of equipment that are users of energy (AC, Ht, 18, 19, 21, 22);
- a storage structure (6, St, F) of thermal energy;the regulation system being capable of defining for at least some of the different items of equipment, respective activation states chosen as a function of parameters, in particular climatic parameters, in the sense of optimization with respect to criteria, **characterized in that** the regulation system is designed to implement in the installation a method according to one of claims 1 to 16.

20. Installation according to claim 17 or 18, or regulation system according to claim 19, **characterized in that** the regulation system comprises at least one input (31) capable of receiving forecasts concerning a period subsequent to the current instant, the installation being designed to take account of said forecasts as part of the incorporation.

21. Installation according to claim 17 or 18, or regulation system according to claim 19, **characterized in that** the regulation system comprises at least one control assembly (24) that prepares recommendations incorporating the forecasts, the recommendations being intended for an automatic control system that receives the recommendations as well as items of information relating to the energy demand, and controls at least some of the items of equipment as a function of the energy demand and of the recommendations.
